# EUROPEAN PATENT SPECIFICATION

(11) **EP 2 025 249 B1**
(45) Date of publication and mention of the grant of the patent: **14.10.2009**
(21) Application number: 07113522.2
(22) Date of filing: 31.07.2007
(51) Int. Cl.: A23L 2/02, A23L 2/44, A23L 3/3418

(54) **A method for cooling beverages**
Verfahren zum Kühlen von Getränken
Procédé de refroidissement de boissons

(43) Date of publication of application: 18.02.2009
(73) Proprietor: Konings NV, 3520 Zonhoven (BE)
(72) Inventor: Nulens, Luc, 3520, Zonhoven (BE)
(74) Representative: Luys, Marie-José A.H.

(56) References cited:
- EP-A- 0 786 513
- WO-A-20/04021807
- WO-A-20/05061691
- DE-A1-102006 016 557
- FR-A- 510 697
- GB-A- 2 241 941
- GB-A- 189 721 387
- US-A1- 2002 122 860
- US-A1- 2005 084 581

## Description

The present invention relates to a method for preserving a beverage in a closable reservoir in which liquid carbon dioxide is introduced into the reservoir with the purpose of cooling the beverage, the beverage comprising a liquid surface, according to the preamble of the first claim.

Cider is an alcoholic beverage which is made from the fermented juice of mainly apples. Fermentation is a process whereby sugar is converted into ethanol and carbon dioxide. In general, the juice will be transported from its production site to the location and/or country where the cider is produced. It is important that the juice is well preserved during transportation. However, pasteurization and addition of preservatives or cooling agents, such as ice, to the juice in order to safely preserve the juice during transportation, are to be avoided. Pasteurization is to be avoided as the juice, after transportation, is to be subjected to fermentation in presence of micro-organisms. Pasteurization may adversely affect this process. The addition of preservatives or cooling agents has the disadvantage that they have to be removed afterwards to reconcentrate the juice.

The use of carbon dioxide for cooling beverages is a known method and is for instance disclosed in GB2425165 and EP0631096B2.

GB2425165 discloses a method and apparatus for the simultaneous carbonisation and sufficient cooling of a beverage in such a way that an ice slush is formed therein. The beverage may be any consumable liquid and may contain food solids. The beverage is stored in a closed carbonator chamber. Carbon dioxide at a pressure between 60 and 120 bar and at a temperature of around ambient plus 5°C is introduced below the surface of the beverage via a nozzle. The carbon dioxide exits the nozzle below the beverage surface and expands as the pressure drops, thereby absorbing energy from the beverage and simultaneously reducing its temperature and carbonating it. The carbon dioxide that is not absorbed, is recirculated in a circuit, including a compressor for pressurizing the carbon dioxide and a condenser for cooling the carbon dioxide. After passing the condenser and the compressor, the carbon dioxide is introduced again into the beverage. This method can however not be used in case it is not desired to carbonate the beverage. WO-A-2005/061691 discloses a method, in which carbon dioxide containing gas is injected into a liquid in order to preserve and carbonate the beverage.

EP0631096B2 describes an apparatus for preserving food products. The apparatus comprises a reserve tank for containing carbon dioxide snow. Carbon dioxide snow is obtained by introducing liquid carbon dioxide in the reserve tank that, due to its expansion and evaporation in the reserve tank, changes at least to a great extent, into solid carbon dioxide. The reserve tank is separate from and in thermal contact with the volume containing the products to be cooled. This use of indirect cooling, results in devices that are large, expensive, inefficient and require a great deal of test time during manufacture and regular servicing.

Carbon dioxide is used in a number of other applications. In US-A-20050084581 and EP-A-0786513, a method and apparatus for sterilization or enzyme inactivation of a liquid food with supercritical carbon dioxide is described. The liquid food Is for instance fresh juice of orange, grape fruit or grape or apple. US-A-20020122860 also describes a method for the reduction of microorganisms present in a liquid product and/or the inactivation of one or more enzymes in which use is made of carbon dioxide. In a first embodiment, use is made of pressurized liquefied carbon dioxide which is at a pressure sufficient to maintain it in a liquid state and at a temperature which does not freeze said liquid product In another embodiment, gaseous carbon dioxide is injected directly into the liquid product, forming a mixture which is thereafter pressurized.

WO-A-2004/021807 describes a method of treating a liquid food so that it obtains an extended shelf-life. The method comprises the step that supercritical carbon dioxide is added to the liquid, pressurized food so that the degree of saturation becomes 90-99%. Thereafter the food is treated so that the degree of saturation increases to 100% or alternatively that the product becomes oversaturated.

GB-2241941 describes a method of charging containers with a liquid and creating a super-atmospheric internal pressure in the container with the purpose of resisting deformation of the walls of the container during normal handling. Thereto liquid is withdrawn from the tank and mixed with nitrogen gas and carbon dioxide gas. The stream is returned to the tank through an inlet at a level beneath that of the upper surface of the liquid in the container. This process is repeated until the liquid has the desired degree of supersaturation with carbon dioxide gas and nitrogen gas.

FR-A-510697 describes a method for preserving and sterilizing milk and fruit juices in which use is made of liquid or solidified carbon dioxide. The beverage is mixed with an amount of pressurized carbon dioxide In such a way that the beverage gets saturated.

GB-A-21387 describes a method to keep an animal or vegetable substance in a fresh state for a prolonged period of time by first bringing the substance in an airtight vessel and then impregnating the substance with an indifferent gas, preferably with carbonic acid gas.

It is an object of the present invention to provide an efficient method and reservoir for preserving beverages, and more in particular fermentable juices, in which the beverage is not carbonated.

This is achieved according to the present invention with a method showing the technical features of the characterizing part of the first claim.

Thereto, the method for preserving a beverage according to this invention is **characterized in that** the liquid carbon dioxide is injected on the liquid surface, in that during injection of the carbon dioxide atmospheric pressure is maintained in the reservoir and in that after injection of the carbon dioxide a pressure below 3 bar is maintained in the reservoir.
In the method of this invention, the beverage is not carbonated by the carbon dioxide, because atmospheric pressure is maintained in the reservoir during injection of the carbon dioxide and because the pressure in the reservoir after injection of the carbon dioxide is kept sufficiently low. Foam formation is reduced to a minimum, because the liquid carbon dioxide is injected on and not below the liquid surface of the beverage. As a result, more efficient use can be made of the reservoir volume. The presence of carbon dioxide inside the reservoir, which is an important reaction product of the dioxide inside the reservoir, which is an important reaction product of the fermentation process, minimizes risk to undesired fermentation processes during transportation of for instance apple juice. This inhibitory effect has been observed even when the temperature increases a couple of degrees during transportation. Another advantage is that because, after injection of the carbon dioxide in the reservoir there is no air left in the reservoir, contamination or oxidation of the beverage by air is avoided.

Injection of the liquid carbon dioxide on the liquid surface has the result that the beverage gets cooled. Upon injection, the liquid carbon dioxide expands in the reservoir and is converted into solid and gaseous carbon dioxide. At least part of the gaseous carbon dioxide may exit the reservoir through a closable opening in the reservoir, which is open during injection of the carbon dioxide. The solid carbon dioxide mixes with the beverage and cools the beverage, resulting at least partly in the formation of a solid phase inside the beverage. After the desired amount of carbon dioxide has been injected, the reservoir is closed.

To improve the efficiency of the preservation of the beverage by the carbon dioxide, the beverage is preferably cooled before it is brought into the reservoir. When the liquid is for instance apple juice, the juice is preferably cooled to a temperature between 269 K and 279 K and more preferably to a temperature between 271 K and 273 K. The cooling can for instance be done by a heat exchanger, but any means known to the person skilled in the art can be used. Injection of liquid carbon dioxide results in a further cooling of the juice to a temperature preferably between 263 K and 271 K and more preferably between 267 K and 270 K. Since the breaking point for save preservation of apple juice lies at 277 K to 279 K, transportation of the apple juice can occur in a save way, without any risks for decay, even when the temperature rises a couple of degrees during transportation. This may particularly be the case when transportation takes a few days. In fact, when the temperature raises a couple of degrees during transportation, the pressure of the gaseous carbon dioxide inside the reservoir will increase.

In order to maintain a pressure below 3 bar in the reservoir after injection of the carbon dioxide, the reservoir comprises an overpressure valve. When the pressure reaches the value of 3 bar, the valve is opened to allow at least part of the gaseous carbon dioxide to exit the reservoir. A carbon dioxide atmosphere will however be maintained above the liquid surface, hereby minimizing risk to undesired fermentation processes.

Optimum control of foam formation is achieved when injecting the liquid carbon dioxide at an angle between 30°-65° with respect to the liquid surface of the beverage.

Preferably, liquid carbon dioxide is introduced at a pressure between 5,2 bar and 20 bar and a temperature between 217 K and 243 K, and more preferably at a pressure between 10 bar and 12,5 bar and at a temperature between 233 K and 239 K. In these circumstances, foam formation when injecting the liquid carbon dioxide is minimized. If necessary, certain measures may be taken in order to avoid risk to formation of solid carbon dioxide in the supply lines before injection of the liquid carbon dioxide in the reservoir. At a pressure between 10 bar and 12,5 bar and at a temperature between 233 K and 239 K, foam formation when injecting the liquid carbon dioxide is further minimized and the risk to formation of solid carbon dioxide in the supply lines before injection of the liquid carbon dioxide in the reservoir is minimal.

The present invention also relates to a reservoir for preserving a beverage, the reservoir comprising an inlet through which the beverage is injected in the reservoir and an injection device for injecting liquid carbon dioxide in the reservoir, according to the preamble of the sixth claim.

The reservoir of this invention is **characterized in that** the injection device is mounted in such a way that the liquid carbon dioxide is injected on a liquid surface of the beverage, in that the reservoir comprises a closable opening and in that the reservoir comprises an overpressure valve, the overpressure valve being opened when a pressure above 3 bar is reached in the reservoir. Preferably, the injection device makes an angle between 30° and 65° with the liquid surface of the beverage.

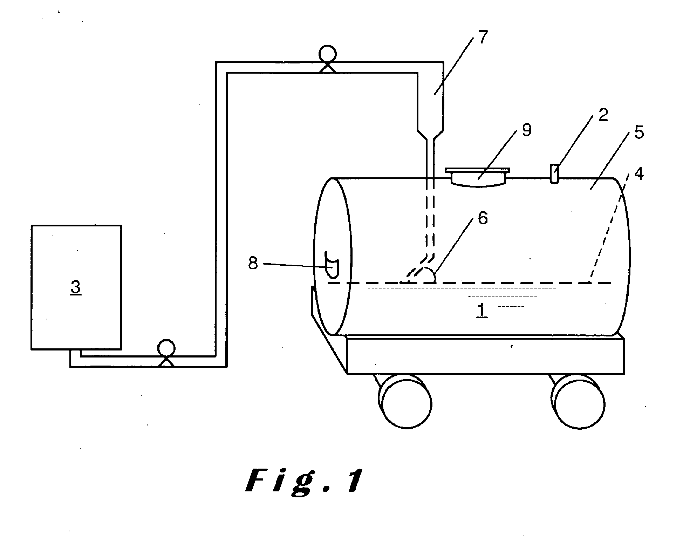

The invention is further elucidated in figure 1.

Figure 1 shows a schematic view elucidating the method and the reservoir for preserving beverages according to this invention.

Liquid carbon dioxide 3 is injected in a reservoir 5, in which a beverage 1 is stored, with the purpose of cooling the beverage 1. The beverage 1 is injected at the beverage inlet 8 in the reservoir 5. Liquid carbon dioxide 3 is injected using an injection device 7. The injection device 7 can be any means ought suitable by the person skilled in the art. During injection of the carbon dioxide, the closable opening 9 in the reservoir 5 is open in order to maintain atmospheric pressure in the reservoir 5. In order to minimize unwanted foam formation, the carbon dioxide 3 is introduced on the liquid surface 4 of the beverage 1. An optimum control of foam formation is obtained by injecting the liquid carbon dioxide 3 at an angle 6 between 30°-65° with respect to the liquid surface 4 of the beverage 1 and preferably at an angle of 45°. Upon injection, expansion of the liquid carbon dioxide 3 takes place. Liquid carbon dioxide 3 is converted into solid and gaseous carbon dioxide (not shown). At least part of the gaseous carbon dioxide may exit the container through a closable opening 9 in the reservoir 5, which is open during injection of the carbon dioxide. The amount of gaseous carbon dioxide that is withdrawn out of the reservoir 5 may directly exit the truck containing the reservoir 5, or it may be re-circulated in a circuit including a compressor and a condenser and introduced back into the reservoir 5 containing the beverage 1 as liquid carbon dioxide. The solid carbon dioxide mixes with the beverage 1 and cools the beverage 1, solidifying at least part, but preferably all of the beverage 1. After injection of the desired amount of carbon dioxide, the closable opening 9 in the reservoir 5 is closed. The amount of gaseous carbon dioxide that is not withdrawn out of the reservoir 5, forms a carbon dioxide atmosphere above the beverage and minimizes risk to undesired fermentation processes. It is preferred that the carbon dioxide 3 upon injection has a pressure between 5,2 bar and 20 bar and a temperature between 217 K and 243 K, and more preferably a pressure between 10 bar and 12,5 bar and a temperature between 233 K and 239 K. To permit achieving a lower temperature and economizing carbon dioxide consumption, the beverage 1 is already cooled to some extent before injection of the liquid carbon dioxide 3. When the beverage 1 is for instance apple juice, the juice is preferably cooled to a temperature between 269 K and 279 K and more preferably to a temperature between 271 K and 273 K. These preferred temperature ranges may vary depending on the beverage to be transported. Injection of liquid carbon dioxide 3 in the cooled juice results in a further cooling to a temperature preferably between 263 K and 271 K, and more preferably between 267 K and 270 K, which provides for a save preservation of the juice during transportation of 2-4 days in an isolated reservoir, even when the temperature raises a couple of degrees during transportation. When temperature raises, the pressure of the gaseous carbon dioxide will increase. When the pressure of the gaseous carbon dioxide reaches a value above 3 bar, at least part of the gaseous carbon dioxide exits the reservoir 5 through an overpressure valve in order to decrease the pressure of the gaseous carbon dioxide inside the reservoir 5 to the desired level.

## Claims

1. A method for preserving a beverage (1) in a closable reservoir (5) in which liquid carbon dioxide (3) is introduced into the reservoir (5) with the purpose of cooling the beverage (1), the beverage (1) comprising an upper liquid surface (4), **characterized in that** the liquid carbon dioxide (3) is injected on the upper liquid surface (4), **in that** during injection of the carbon dioxide (3) atmospheric pressure is maintained in the reservoir (5) and **in that** after injection of the carbon dioxide (3) a pressure below 3 bar is maintained in the reservoir (5).

2. A method according to claim 1, **characterized in that** the beverage (1) is cooled before the injection of the liquid carbon dioxide (3) on the upper liquid surface (4).

3. A method according to claim 2, **characterized in that** the beverage (1) is cooled to a temperature between 269 K and 279 K.

4. A method according to anyone of claims 1-3, **characterized in that** the liquid carbon dioxide (3) is injected at an angle between 30°-65° with respect to the upper liquid surface (4) of the beverage (1).

5. A method according to anyone of claims 1-4, **characterized in that** the liquid carbon dioxide (3) upon injection has a pressure between 5,2 bar and 20 bar and a temperature between 217 K and 243 K.

6. A reservoir (5) for preserving a beverage (1), the reservoir comprising an inlet (8) through which the beverage (1) is injected in the reservoir (5), the beverage comprising an upper liquid surface (4), the reservoir further comprising an injection device (7) provided for injecting liquid carbon dioxide (3) in the reservoir (5), **characterized in that** the injection device (7) is provided for injecting the liquid carbon dioxide (3) on the upper liquid surface (4) of the beverage (1), **in that** the reservoir (5) comprises a closable opening (9), and **in that** the reservoir (5) comprises an overpressure valve (2) provided for maintaining a pressure below 3 bar in the reservoir (5).

7. A reservoir according to claim 6, **characterized in that** the injection device (7) is provided for injecting the liquid carbon dioxide (3) at an angle between 30°-65° with the upper liquid surface (4) of the beverage (1).

## Patentansprüche

1. Verfahren zum Aufbewahren eines Getränks (1) in einem verschließbaren Behälter (5), bei dem flüssiges Kohlenstoffdioxid (3) in den Behälter (5) zum Zweck des Kühlens des Getränks (1) eingeführt wird, wobei das Getränk eine obere Flüssigkeitsfläche (4) aufweist, **dadurch gekennzeichnet, dass** das flüssige Kohlenstoffdioxid (3) auf die obere Flüssigkeitsfläche (4) eingespritzt wird, dass während des Einspritzens des Kohlenstoffdioxids (3) der Luftdruck in dem Behälter (5) beibehalten wird, und dass nach dem Einspritzen des Kohlenstoffdioxids (3) ein Druck unter 3 bar in dem Behälter (5) aufrecht erhalten wird.

2. Verfahren nach Anspruch 1, **dadurch gekennzeichnet, dass** das Getränk (1) vor dem Einspritzen des flüssigen Kohlenstoffdioxids (3) auf die obere Flüssigkeitsfläche (4) gekühlt wird.

3. Verfahren nach Anspruch 2, **dadurch gekennzeichnet, dass** das Getränk (1) auf eine Temperatur zwischen 296 K und 279 K gekühlt wird.

4. Verfahren nach einem der Ansprüche 1 bis 3, **dadurch gekennzeichnet, dass** das flüssige Kohlenstoffdioxid (3) mit einem Winkel zwischen 30° und 65° in Bezug zu der oberen Flüssigkeitsfläche (4) des Getränks (1) eingespritzt wird.

5. Verfahren nach einem der Ansprüche 1 bis 4, **dadurch gekennzeichnet, dass** das flüssige Kohlenstoffdioxid (3) beim Einspritzen einen Druck zwischen 5,2 bar und 20 bar und eine Temperatur zwischen 217 K und 243 K hat.

6. Behälter (5) zum Aufbewahren eines Getränks (1), wobei der Behälter einen Einlass (8) aufweist, durch den das Getränk (1) in den Behälter (5) eingespritzt wird, wobei das Getränk eine obere Flüssigkeitsfläche (4) aufweist, wobei der Behälter ferner eine Einspritzvorrichtung (7) aufweist, die zum Einspritzen des flüssigen Kohlenstoffdioxids (3) in den Behälter (5) bereitgestellt ist, **dadurch gekennzeichnet, dass** die Einspritzvorrichtung (7) bereitgestellt ist, um das flüssige Kohlenstoffdioxid (3) auf die obere Flüssigkeitsfläche (4) des Getränks (1) zu spritzen, dass der Behälter (5) eine verschließbare Öffnung (9) aufweist, und dass der Behälter (5) ein Überdruckventil (2) aufweist, das bereitgestellt ist, um einen Druck unter 3 bar in dem Behälter (5) aufrecht zu erhalten.

7. Behälter nach Anspruch 6, **dadurch gekennzeichnet, dass** die Einspritzvorrichtung (7) zum Einspritzen des flüssigen Kohlenstoffdioxids (3) mit einem Winkel zwischen 30° und 65° zu der oberen Flüssigkeitsfläche (4) des Getränks (1) bereitgestellt ist.

## Revendications

1. Procédé pour conserver une boisson (1) dans un réservoir fermable (5), dans lequel du dioxyde de carbone liquide (3) est introduit dans le réservoir (5) dans le but de refroidir la boisson (1), la boisson (1) comprenant une surface liquide supérieure (4), **caractérisé en ce que** le dioxyde de carbone liquide (3) est injecté sur la surface liquide supérieure (4), **en ce que** pendant l'injection du dioxyde de carbone (3), la pression atmosphérique est maintenue dans le réservoir (5) et **en ce qu'**après l'injection du dioxyde de carbone (3), une pression en dessous de 3 bar est maintenue dans le réservoir (5).

2. Procédé selon la revendication 1, **caractérisé en ce que** la boisson (1) est refroidie avant l'injection du dioxyde de carbone liquide (3) sur la surface liquide supérieure (4).

3. Procédé selon la revendication 2, **caractérisé en ce que** la boisson (1) est refroidie à une température comprise entre 269 K et 279 K.

4. Procédé selon l'une quelconque des revendications 1 - 3, **caractérisé en ce que** le dioxyde de carbone liquide (3) est injecté à un angle compris entre 30° et 65° par rapport à la surface liquide supérieure (4) de la boisson (1).

5. Procédé selon l'une quelconque des revendications 1 - 4, **caractérisé en ce que** le dioxyde de carbone liquide (3) a, lors de l'injection, une pression comprise entre 5,2 bar et 20 bar et une température comprise entre 217 K et 243 K.

6. Réservoir (5) pour conserver une boisson (1), le réservoir comprenant une entrée (8) par laquelle la boisson (1) est injectée dans le réservoir (5), la boisson comprenant une surface liquide supérieure (4), le réservoir comprenant également un dispositif d'injection (7) prévu pour injecter du dioxyde de carbone liquide (3) dans le réservoir (5), **caractérisé en ce que** le dispositif d'injection (7) est prévu pour injecter le dioxyde de carbone liquide (3) sur la surface liquide supérieure (4) de la boisson (1), **en ce que** le réservoir (5) comprend une ouverture fermable (9), et **en ce que** le réservoir (5) comprend une soupape de surpression (2) prévue pour maintenir une pression en dessous de 3 bar dans le réservoir (5).

7. Réservoir selon la revendication 6, **caractérisé en ce que** le dispositif d'injection (7) est prévu pour injecter le dioxyde de carbone liquide (3) à un angle compris entre 30° et 65° par rapport à la surface liquide supérieure (4) de la boisson (1).
